# EUROPÄISCHE PATENTSCHRIFT

(11) **EP 2 732 194 B1**
(45) Veröffentlichungstag und Bekanntmachung des Hinweises auf die Patenterteilung: **18.11.2015**
(21) Anmeldenummer: 12730978.9
(22) Anmeldetag: 02.07.2012
(51) Int. Cl.: F16L 37/00, F16L 37/098

(54) **AUFNAHMETEIL EINER KUPPLUNG FÜR EINE FLUIDLEITUNG**
RECEIVING PART OF A COUPLING FOR A FLUID LINE
PARTIE LOGEMENT D'UN ACCOUPLEMENT POUR CONDUITE DE FLUIDE

(30) Priorität: 14.07.2011 DE 102011107186
(43) Veröffentlichungstag der Anmeldung: 21.05.2014
(73) Patentinhaber: A. RAYMOND et Cie, 38000 Grenoble (FR)
(72) Erfinder: FRÄULIN, Christian, 79183 Waldkirch (DE); KURTH, Martin, 79400 Kandern (DE); LAUX, Oliver, 79541 Lörrach (DE); SCHULZ, Stefan, 79540 Lörrach (DE); BÜLAU, André, 70569 Stuttgart (DE)
(74) Vertreter: RACKETTE Patentanwälte PartG mbB
(86) Internationale Anmeldenummer: PCT/EP2012/062839
(87) Internationale Veröffentlichungsnummer: WO 2013/007552

(56) Entgegenhaltungen:
- DE-B3-102008 014 255
- DE-B3-102009 043 088

## Beschreibung

Die Erfindung betrifft ein Aufnahmeteil einer Kupplung für eine Fluidleitung gemäß des Oberbegriffs des Patentanspruchs 1.

Ein derartiges Aufnahmeteil ist aus DE 10 2008 014 255 B3 bekannt. Das Aufnahmeteil der Kupplung weist einen elektrischen Schwingkreis auf, der mit einer Abstimmeinrichtung kontaktfrei derart zusammenwirkt, dass der Schwingkreis bei einer von der Schließstellung abweichenden Zwischenstellung des Einsteckteils eine von der Schließkennfrequenz abweichende Resonanzfrequenz und in der Schließstellung die Schließkennfrequenz aufweist, wobei die Abstimmeinrichtung über zwei relativ zueinander verschiebbare, relativ schwere Spulenkernteile auf die Induktivität des elektrischen Schwingkreises einwirkt. In der Schließstellung der Kupplung liegen die Spulenkernteile am Aufnahmeabschnitt des Aufnahmeteils und am Einsteckschaft des Einsteckteils an. Ein Spulenkernteil liegt zudem an einem Dichtungsring der Dichteinheit an.

Der Erfindung liegt die Aufgabe zugrunde, ein Aufnahmeteil einer Kupplung der eingangs genannten Art anzugeben, das insbesondere auch bei relativ starken auf sie einwirkenden Beschleunigungskräften mechanisch sehr stabil ist.

Die Aufgabe wird durch ein Aufnahmeteil einer Kupplung der eingangs genannten Art erfindungsgemäß mit den kennzeichnenden Merkmalen des Patentanspruchs 1 gelöst.

Dadurch, dass erfindungsgemäß auf die Gestalt der Spule selbst Einfluss genommen wird, lässt sich ein von relativ schweren Teilen freier Aufbau erzielen, so dass auch bei hohen Beschleunigungskräften die mechanische Langzeitstabilität der für die Dichtigkeit maßgeblichen Kupplungsteile durch die Trägheit von Kupplungsteilen nicht beeinträchtigt wird. Eine entsprechende Kupplung kann auch nach längerem Gebrauch getrennt und wieder ordnungsgemäß geschlossen werden.

Bei einer Ausführungsform der Erfindung ist das Aufnahmeteil der Kupplung derart ausgestaltet, dass sich als Gestaltunterschied die Länge der Spule in der Zwischenstellung von der Länge Spule in der Schließstellung unterscheidet.

Bei einer weiteren Ausführungsform der Erfindung ist das Aufnahmeteil der Kupplung derart ausgestaltet, dass sich als Gestaltunterschied der Durchmesser der Spule in der Zwischenstellung von dem Durchmesser der Spule in der Schließstellung unterscheidet.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnungen.

Es zeigen:
- Fig. 1: in einer perspektivischen Explosionsansicht ein erstes erfindungsgemäßes Ausführungsbeispiel einer Kupplung mit einem Aufnahmeteil und mit einem Einsteckteil, bei dem sich die Länge einer Spule in der Zwischenstellung von der Länge der Spule in der Schließstellung unterscheidet,
- Fig. 2: in einem Längsschnitt das Ausführungsbeispiel gemäß Fig. 1 mit dem Einsteckteil in einer Zwischenstellung,
- Fig. 3: in einem Längsschnitt das Ausführungsbeispiel gemäß Fig. 1 mit dem Einsteckteil in der Schließstellung,
- Fig. 4: in einer perspektivischen Explosionsansicht ein zweites erfindungsgemäßes Ausführungsbeispiel einer Kupplung mit einem Aufnahmeteil und mit einem Einsteckteil, bei dem sich die Länge einer Spule in der Zwischenstellung von der Länge der Spule in der Schließstellung unterscheidet und bei dem die Spule zwei voneinander beabstandete Spulenteilwicklungen aufweist,
- Fig. 5: in einem Längsschnitt einen Spulenträger bei dem Ausführungsbeispiel gemäß Fig. 4 mit Spule,
- Fig. 6: in einer perspektivischen detaillierten Darstellung den Spulenträger gemäß Fig. 5 ohne Spule,
- Fig. 7: in einem Längsschnitt das Ausführungsbeispiel gemäß Fig. 4 mit dem Einsteckteil in einer Zwischenstellung,
- Fig. 8: in einem Längsschnitt das Ausführungsbeispiel gemäß Fig. 4 mit dem Einsteckteil in einer Schließstellung,
- Fig. 9: in einer perspektivischen Explosionsansicht ein drittes erfindungsgemäßes Ausführungsbeispiel einer Kupplung mit einem Aufnahmeteil und mit einem Einsteckteil, bei dem sich der Durchmesser einer Spule in der Zwischenstellung von dem Durchmesser der Spule in der Schließstellung unterscheidet,
- Fig. 10: in einem Längsschnitt das Ausführungsbeispiel gemäß Fig. 9 mit dem Einsteckteil in einer Zwischenstellung und
- Fig. 11: in einem Längsschnitt das Ausführungsbeispiel gemäß Fig. 9 mit dem Einsteckteil in der Schließstellung.

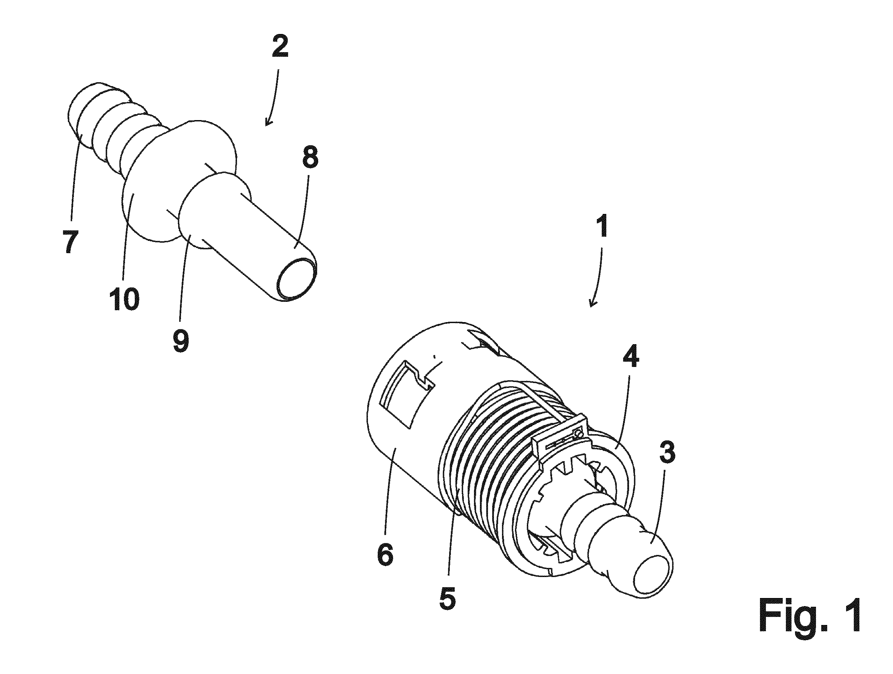

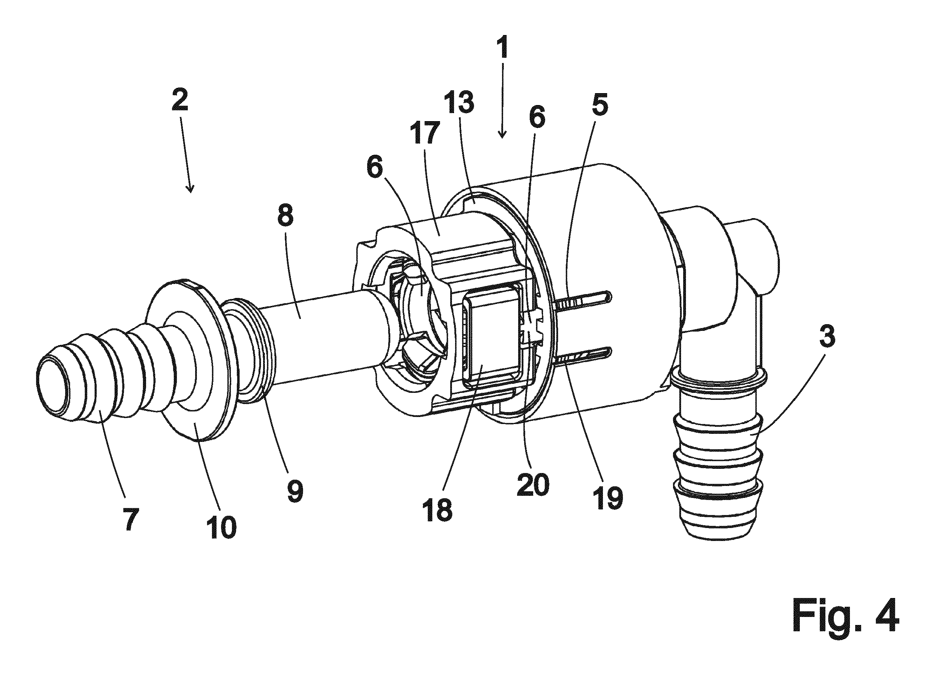

Fig. 1 zeigt in einer perspektivischen Explosionsansicht ein erstes erfindungsgemäßes Ausführungsbeispiel einer Kupplung zum Verbinden von Enden einer in Fig. 4 nicht dargestellten Fluidleitung mit einem Aufnahmeteil 1 und mit einem Einsteckteil 2. Bei dem Ausführungsbeispiel gemäß Fig. 1 ist das Aufnahmeteil 1 länglich ausgebildet. Es verfügt an einem rückseitigen Ende zum Verbinden mit einem Ende der Fluidleitung über einen Anschlussstutzen 3. Das Aufnahmeteil 1 weist eine Kondensatorträgerplatte 4 mit einem Kondensator fester Kapazität, eine Spule 5 und einen hülsenartig ausgebildeten Druckschieber 6 als ein Beispiel eines Einwirkteils auf. Auch das Einsteckteil 2 ist bei dem Ausführungsbeispiel gemäß Fig. 1 länglich ausgebildet. Es verfügt an einem rückseitigen Ende zum Verbinden mit einem weiteren Ende der Fluidleitung über einen Anschlussstutzen 7. Das Einsteckteil 2 weist einen Einsteckschaft 8, einen Rastbund 9 zum Fixieren in dem Aufnahmeteil 1 sowie einen Anpressbund 10 auf. Das so ausgebildete Aufnahmeteil 1 ermöglicht eine hohe Detektionsreichweite, da dessen Spule 5 einen großen Durchmesser aufweist und Verluste im Spulenkern vermieden werden.

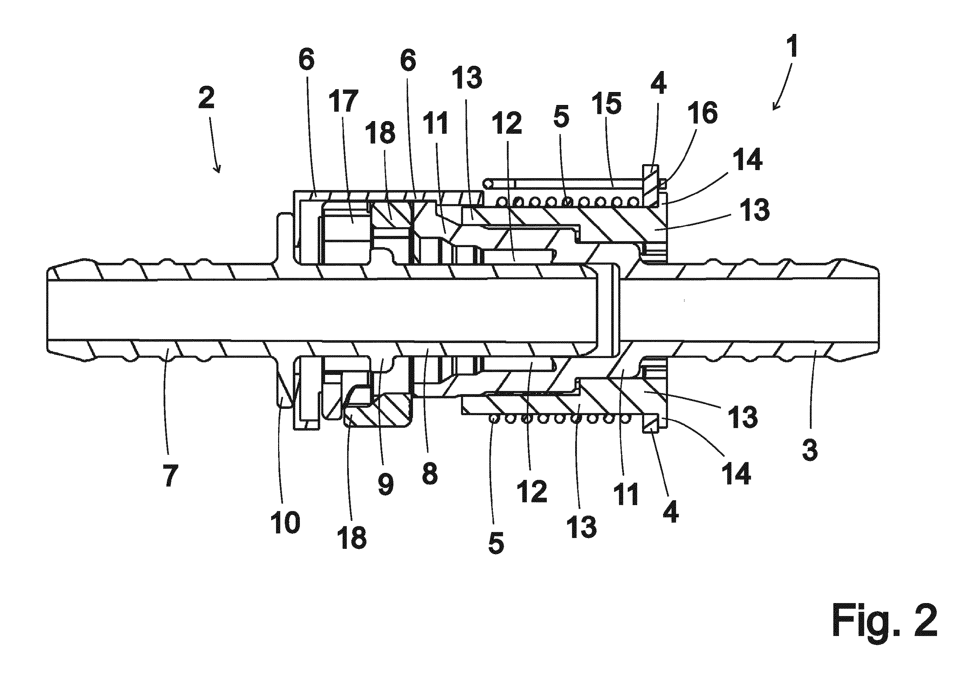

Fig. 2 zeigt in einem Längsschnitt das erste Ausführungsbeispiel gemäß Fig. 1 in einer Zwischenstellung, in der das Einsteckteil 2 mit dem Einsteckschaft 8 bis zum Anliegen des Anpressbunds 10 an dem Druckschieber 6 in eine Aufnahmehülse 11 des Aufnahmeteils 1 eingeführt ist, wobei der Einsteckschaft 8 mit seiner radial nach außen weisenden Seite an einer in die Aufnahmehülse 11 integrierten Dichteinheit 12 anliegt.

Das Aufnahmeteil 1 weist einen Spulenträger 13 auf, der an der Außenseite der Aufnahmehülse 11 verrastbar mit dieser verbunden ist, und der an einem dem Anschlussstutzen 3 des Aufnahmeteils 1 zugewandten Ende mit einem Spulenträgerbund 14 ausgebildet ist. An dem Spulenträgerbund 14 liegt auf der dem Anschlussstutzen 3 des Aufnahmeteils 1 abgewandten Seite die ringförmig ausgebildete Kondensatorträgerplatte 4 an. Die Spule 5 ist über den Spulenträger 13 gewickelt und schraubenförmig ausgebildet, wobei sie aus einem federdrahtartigen Material mit einem Abstand zwischen den einzelnen Wendeln hergestellt und über einen Spulensteg 15 mit einer Kontaktstelle 16 der Kondensatorträgerplatte 4 verbunden ist.

Das Aufnahmeteil 1 weist zum Verbinden des Einsteckteils 2 mit dem Aufnahmeteil 1 einen mit der Aufnahmehülse 11 verbundenen Haltefederaufnahmekörper 17 mit einer Haltefeder 18 auf.

Der Druckschieber 6 ist auf dem Haltefederaufnahmekörper 17, der Aufnahmehülse 11 sowie dem Spulenträger 13 verschiebbar gelagert und liegt mit einem rückseitigen Ende an der Spule 5 an. Beim Einführen des Einsteckteils 2 in das Aufnahmeteil 1 schiebt der Anpressbund 10 den Druckschieber 6 nach dem Anschlagen des Anpressbunds 10 an einem dem rückseitigen Ende gegenüberliegenden vorderseitigen Ende des Druckschiebers 6 über den Haltefederaufnahmekörper 17, die Aufnahmehülse 11 und den Spulenträger 13. Dabei drückt das rückseitige Ende des Druckschiebers 6 auf die Spule 5 und verkürzt so die Spule 5 in ihrer Länge.

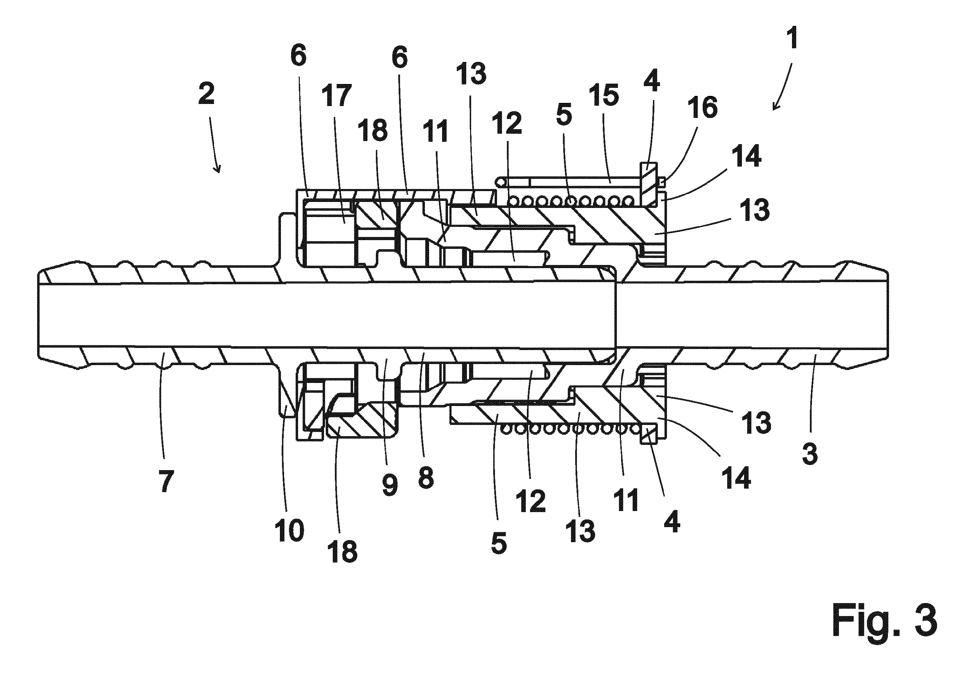

Fig. 3 zeigt in einem Längsschnitt das Ausführungsbeispiel gemäß Fig. 1 in der Schließstellung. Das Einsteckteil 2 ist unter Hinterrasten des Rastbunds 9 durch die Haltefeder 18 vollständig in die Aufnahmehülse 11 des Aufnahmeteils 1 eingeführt. Die Spule 5 ist im Vergleich zu der in Fig. 2 gezeigten Zwischenstellung unter Veränderung ihrer Induktivität in der Länge verkürzt.

Fig. 4 zeigt in einer perspektivischen Explosionsansicht ein zweites erfindungsgemäßes Ausführungsbeispiel einer Kupplung zum Verbinden von Enden einer in Fig. 4 nicht dargestellten Fluidleitung mit einem Aufnahmeteil 1 und mit einem Einsteckteil 2. Bei den Ausführungsbeispielen gemäß Fig. 1 bis Fig. 3 und Fig. 4 sind einander entsprechende Elemente mit den gleichen Bezugszeichen versehen und im Weiteren zum Teil nicht näher erläutert. Bei dem Ausführungsbeispiel gemäß Fig. 4 weist die Spule 5 des erfindungsgemäßen Aufnahmeteils 1 zwei voneinander beabstandete Spulenteilwicklungen 19 auf. Das Aufnahmeteil 1 verfügt über einen Haltefederaufnahmekörper 17 mit einer Haltefeder 18 sowie über einen teilweise innerhalb des Halteaufnahmekörpers 17 angeordneten Druckschieber 6 mit zwei jeweils am Spulenträger 13 anliegenden, stiftartig ausgebildeten Druckschieberenden 20 als weiteres Beispiel eines Einwirkteils.

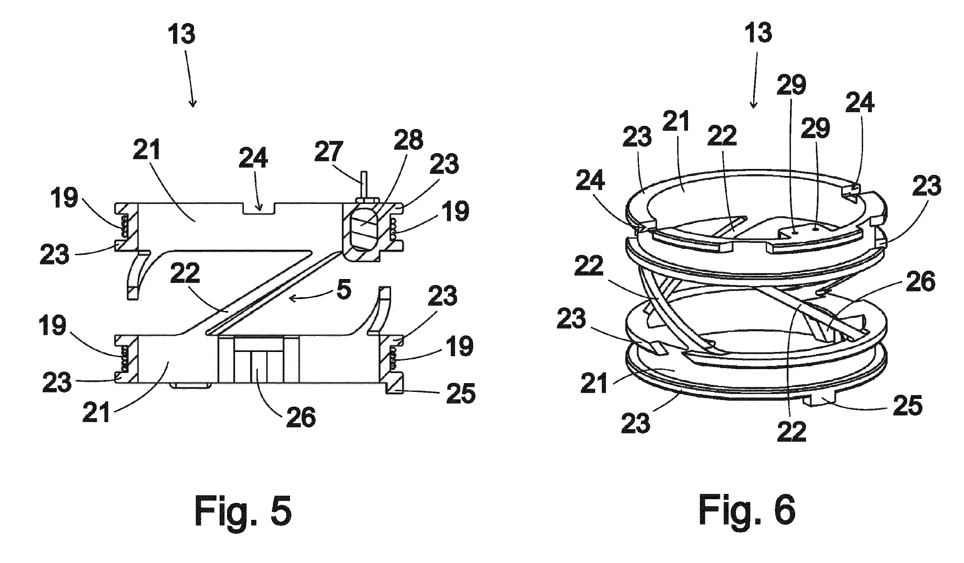

Fig. 5 zeigt in einem Längsschnitt den Spulenträger 13 des in Fig. 4 gezeigten Ausführungsbeispiels. Der Spulenträger 13 weist zwei Wicklungsträger 21 zur Aufnahme der Spulenteilwicklungen 19 auf, die über sich schräg zwischen den Wicklungsträgern 21 erstreckende stabförmige Federstege 22 miteinander verbunden sind. Die Spulenteilwicklungen 19 sind über eine entlang eines Federstegs 22 verlaufende elektrische Leitung verbunden, die Teil der Spule 5 ist. Die Wicklungsträger 21 sind jeweils mit einem im Wesentlichen kreisförmigen Querschnitt ausgebildet und verfügen jeweils beidseitig über einen Wicklungsträgerbund 23. Einer der Wicklungsträger 21 weist auf der den Federstegen 22 abgewandten Seite Rastnuten 24 auf, die dazu dienen, bei der Montage eine exakte Positionierung des Spulenträgers 13 sicherzustellen. Der andere Wicklungsträger 21 verfügt auf der den Federstegen 22 abgewandten Seite über eine Rastnase 25, die ebenfalls der exakten Positionierung bei der Montage dient, sowie auf der Innenseite des Wicklungsträgers 21 über Drucknuten 26 zur Aufnahme der Druckschieberenden 20. Der mit den Rastnuten 24 ausgebildete Wicklungsträger 21 umschließt einen mit zwei Kontaktstiften 27 ausgestatteten Kondensator 28.

Fig. 6 zeigt in einer perspektivischen Detaildarstellung den in Fig. 5 gezeigten Spulenträger 13 ohne Spule 5 und Kontaktstifte 27. Der Körper des mit zwei Rastnuten 24 ausgebildeten Wicklungsträgers 21 weist zwei lochartig ausgebildete Kontaktstiftdurchführungen 29 zur Durchführung der Kontaktstifte 27 des Kondensators 28 auf.

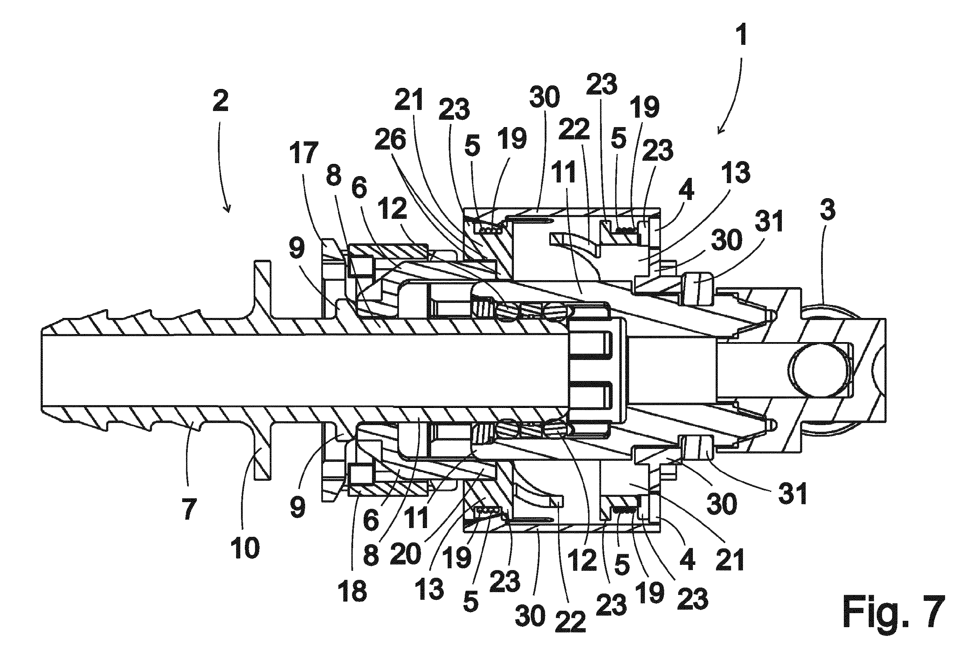

Fig. 7 zeigt in einem Längsschnitt das Ausführungsbeispiel gemäß Fig. 4 in einer Zwischenstellung, in der das Einsteckteil 2 mit dem Einsteckschaft 8 bis zum Anliegen des Rastbunds 9 an dem Druckschieber 6 in die Aufnahmehülse 11 des Aufnahmeteils 1 eingeführt ist, wobei der Einsteckschaft 8 an einer in die Aufnahmehülse 11 integrierten Dichteinheit 12 anliegt.

Der Druckschieber 6 des Aufnahmeteils 1 ist verschiebbar im Haltefederaufnahmekörper 17 und auf der Aufnahmehülse 11 gelagert. Jedes Druckschieberende 20 greift in eine Drucknut 26 des Spulenträgers 13 ein. Das Aufnahmeteil 1 weist eine Spulenträgerhülse 30 auf, die an der Außenseite der Aufnahmehülse 11 mit dieser verbunden und dort durch einen Sicherungsring 31 gesichert ist. Der Wicklungsträger 21, in dessen Drucknuten 26 die Druckschieberenden 20 greifen, ist verschiebbar auf der Aufnahmehülse 11 und in der Spulenträgerhülse 30 gelagert. Der andere Wicklungsträger 21 ist mechanisch fest mit der Spulenträgerhülse 30 verbunden.

Beim Einführen des Einsteckteils 2 in das Aufnahmeteil 1 schiebt der Rastbund 9 den Druckschieber 6 und den verschiebbar gelagerten Wicklungsträger 21 nach dem Anschlagen des Rastbunds 9 am vorderseitigen Ende des Druckschiebers 6 entgegen der Federkraft der Federstege 22 über die Aufnahmehülse 11 und verkürzt so die Länge des Spulenträgers 13. Dadurch verringert sich der Abstand der Spulenteilwicklungen 19 und damit die Länge der Spule 5.

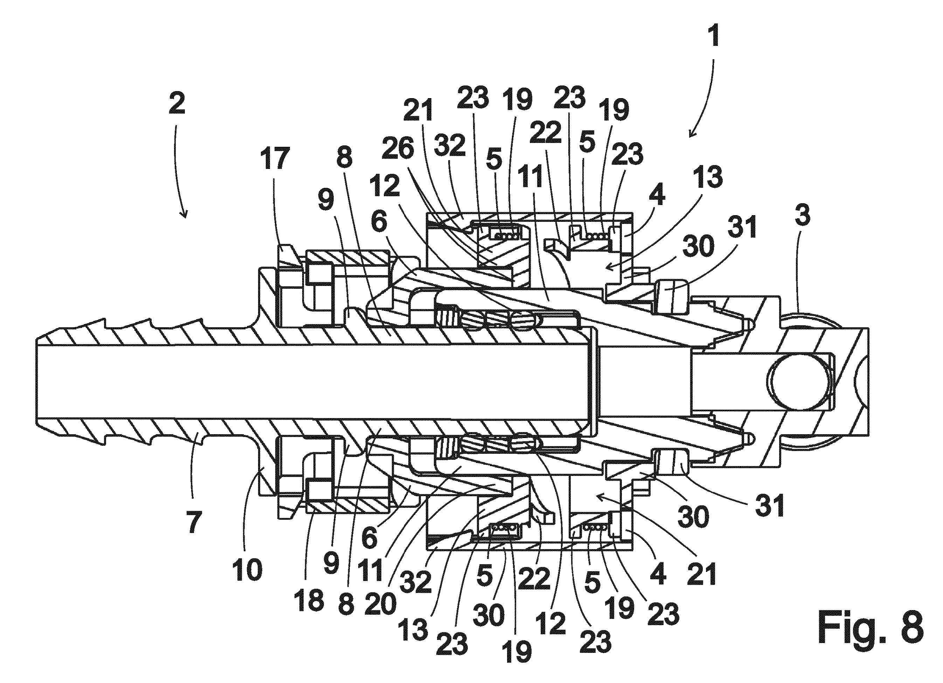

Fig. 8 zeigt in einem Längsschnitt das Ausführungsbeispiel gemäß Fig. 4 in der Schließstellung. Das Einsteckteil 2 ist hier vollständig in die Aufnahmehülse 11 des Aufnahmeteils 1 eingeführt. Ein Haltebund 32 der Spulenträgerhülse 30 hintergreift zur Aufnahme der durch die Federstege 22 auf die Haltefeder 18 ausgeübten Relaxationskräfte den verschiebbar gelagerten Wicklungsträger 21. Der Spulenträger 13 und damit zugleich die Spule 5 sind im Vergleich zu der in Fig. 7 gezeigten Zwischenstellung unter Veränderung ihrer Induktivität verkürzt.

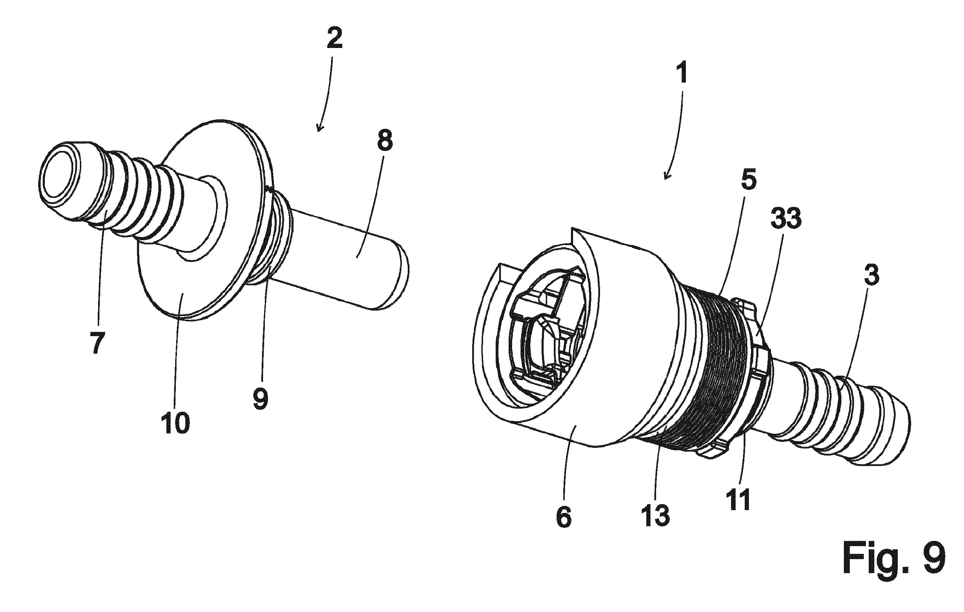

Fig. 9 zeigt in einer perspektivischen Explosionsansicht ein drittes erfindungsgemäßes Ausführungsbeispiel einer Kupplung zum Verbinden von Enden einer in Fig. 9 nicht dargestellte Fluidleitung mit einem Aufnahmeteil 1 und mit einem Einsteckteil 2. Bei den Ausführungsbeispielen gemäß Fig. 1 bis Fig. 3, und Fig. 4 bis Fig. 8 sowie Fig. 9 sind einander entsprechende Elemente mit den gleichen Bezugszeichen versehen und im Weiteren zum Teil nicht näher erläutert. Bei dem Ausführungsbeispiel gemäß Fig. 9 weist das Aufnahmeteil 1 einen hülsenförmig ausgebildeten Druckschieber 6 als Beispiel eines Einwirkteils auf, der auf seiner dem Anpressbund 10 abgewandten Seite an einem plastisch verformbar ausgebildeten Spulenträger 13 anliegt. Um den Spulenträger 13 ist außenseitig eine schraubenförmig ausgebildete Spule 5 dicht gewickelt. Der Spulenträger 13 liegt auf seiner dem Druckschieber 6 abgewandten Seite an einem Widerlager 33 an. Das Widerlager 33 ist verrastbar mit der Aufnahmehülse 11 verbunden.

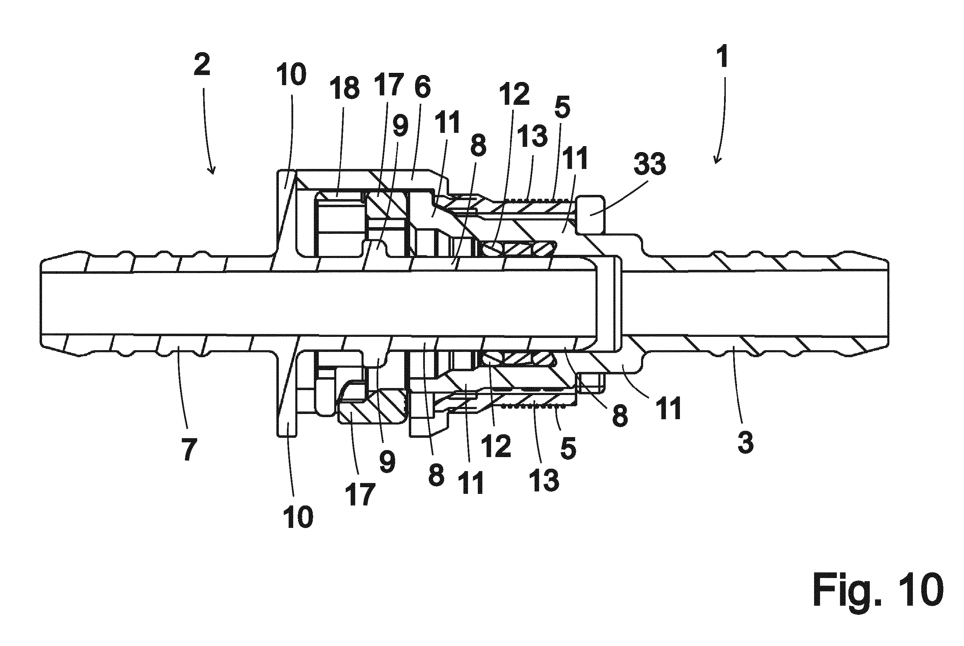

Fig. 10 zeigt in einem Längsschnitt das Ausführungsbeispiel gemäß Fig. 9 in einer Zwischenstellung, in der das Einsteckteil 2 mit dem Einsteckschaft 8 bis zum Anliegen des Anpressbunds 10 an dem Druckschieber 6 in die Aufnahmehülse 11 des Aufnahmeteils 1 eingeführt ist, wobei der Einsteckschaft 8 an einer in die Aufnahmehülse 11 integrierten Dichteinheit 12 anliegt.

Das Aufnahmeteil 1 weist einen Haltefederaufnahmekörper 17 mit einer Haltefeder 18 auf, der mit der Aufnahmehülse 11 verbunden ist. Der Druckschieber 6 ist verschiebbar auf dem Haltefederaufnahmekörper 17 und der Aufnahmehülse 11 gelagert. Beim Einführen des Einsteckteils 2 in das Aufnahmeteil 1 schiebt der Anpressbund 10 den Druckschieber 6 nach dem Anschlagen des Anpressbunds 10 an dem Druckschieber 6 über den Haltefederaufnahmekörper 17 und die Aufnahmehülse 11 auf den plastisch verformbaren Spulenträger 13 und verändert dadurch abschnittsweise zumindest den Durchmesser, in der Regel aber auch die Länge der Spule.

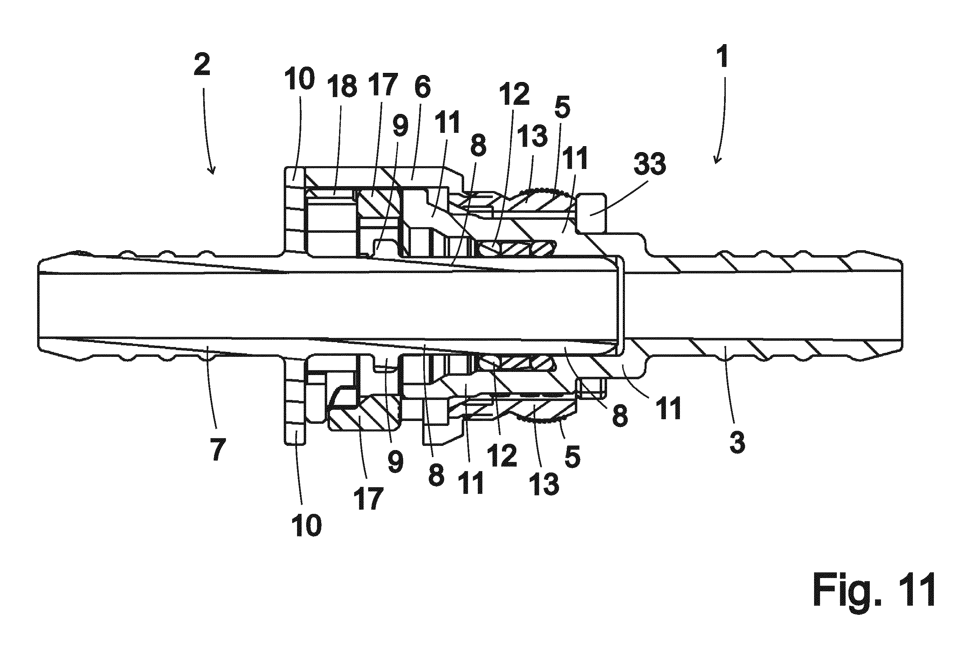

Fig. 11 zeigt in einem Längsschnitt das Ausführungsbeispiel gemäß Fig. 9 in der Schließstellung. Das Einsteckteil 2 ist hier vollständig in die Aufnahmehülse 11 des Aufnahmeteils 1 eingeführt. Der Spulenträger 13 ist im Vergleich zu der in Fig. 10 gezeigten Zwischenstellung nunmehr verkürzt und radial nach außen aufgewölbt. Die Spule 5 weist im Vergleich zu der in Fig. 10 gezeigten Zwischenstellung abschnittsweise einen unter Veränderung ihrer Induktivität vergrößerten Durchmesser bei gleichzeitig in der Regel verringerter Länge auf.

## Patentansprüche

1. Aufnahmeteil (1) einer Kupplung für eine Fluidleitung, das zum Aufnehmen und Verriegeln eines Einsteckteils (2) in einer Schließstellung eingerichtet ist, wobei ein mit dem Aufnahmeteil (1) verbundener elektrischer Schwingkreis mit einer Spule (5) vorhanden ist, der in der Schließstellung des Einsteckteils (2) bei Beaufschlagen mit elektromagnetischer Energie zum Schwingen mit einer bestimmten, einer Schließkennfrequenz entsprechenden Resonanzfrequenz eingerichtet ist, wobei der Schwingkreis permanent geschlossen ist und wobei eine Abstimmeinrichtung vorhanden ist, die mit dem Schwingkreis kontaktfrei und mit dem Einsteckteil (2) mechanisch derart zusammenwirkt, dass der Schwingkreis bei einer von der Schließstellung abweichenden Zwischenstellung des Einsteckteils (2) eine von der Schließkennfrequenz abweichende Resonanzfrequenz und in der Schließstellung die Schließkennfrequenz aufweist, wobei die Abstimmeinrichtung auf die Induktivität des elektrischen Schwingkreises einwirkt, **dadurch gekennzeichnet, dass** ein Einwirkteil (6) vorhanden ist, das beim Einstecken des Einsteckteils (2) in das Aufnahmeteil (1) mechanisch derart auf die Spule (5) einwirkt, dass sich die Gestalt der Spule (5) in der Schließstellung von der Gestalt der Spule (5) in der Zwischenstellung unterscheidet.

2. Aufnahmeteil (1) nach Anspruch 1, **dadurch gekennzeichnet, dass** die Spule (5) in der Schließstellung eine Länge aufweist, die sich von der Länge der Spule (5) in der Zwischenstellung unterscheidet.

3. Aufnahmeteil (1) nach Anspruch 2, **dadurch gekennzeichnet, dass** das Einwirkteil als Druckschieber (6) ausgebildet ist, der beim Einstecken des Einsteckteils (2) in das Aufnahmeteil (1) über eine Aufnahmehülse (11) gleitet und derart auf die Spule (5) einwirkt, dass die Länge der Spule (5) in der Schließstellung geringer als die Länge der Spule (5) in der Zwischenstellung ist.

4. Aufnahmeteil (1) nach Anspruch 3, **dadurch gekennzeichnet, dass** der Druckschieber (6) beim Einstecken des Einsteckteils (2) in das Aufnahmeteil (1) über einen zwischen dem Druckschieber (6) und der Aufnahmehülse (11) angeordneten Spulenträger (13) gleitet und unmittelbar so auf die Spule (5) einwirkt, dass die Länge der Spule (5) in der Schließstellung geringer als die Länge der Spule (5) in der Zwischenstellung ist.

5. Aufnahmeteil (1) nach einem der Ansprüche 1 bis 3, **dadurch gekennzeichnet, dass** die Spule (5) aus zwei voneinander beabstandeten Spulenteilwicklungen (19) besteht, wobei sich der Abstand der Spulenteilwicklungen (19) in der Schließstellung vom Abstand der Spulenteilwicklungen (19) in der Zwischenstellung unterscheidet.

6. Aufnahmeteil (1) nach Anspruch 5, **dadurch gekennzeichnet, dass** die beiden Spulenteilwicklungen (19) durch einen als separates Bauteil ausgebildeten Spulenträger (13) aufgenommen werden, der aus zwei Wicklungsträgern (21) und mindestens einem zwischen den Wicklungsträgern (21) angebrachten Federelement (22) besteht.

7. Aufnahmeteil (1) nach Anspruch 1, **dadurch gekennzeichnet, dass** die Spule (5) in der Schließstellung wenigstens abschnittsweise einen Durchmesser aufweist, der sich von dem Durchmesser der Spule (5) in der Zwischenstellung unterscheidet.

8. Aufnahmeteil (1) nach Anspruch 7, **dadurch gekennzeichnet, dass** das Einwirkteil als Druckschieber (6) ausgebildet ist, der beim Einstecken des Einsteckteils (2) in das Aufnahmeteil (1) über eine Aufnahmehülse (11) gleitet und derart auf die Spule (5) einwirkt, dass der Durchmesser der Spule (5) in der Schließstellung wenigstens abschnittsweise größer als der Durchmesser der Spule (5) in der Zwischenstellung ist.

9. Aufnahmeteil (1) nach Anspruch 8, **dadurch gekennzeichnet, dass** ein plastisch verformbar ausgebildeter Spulenträger (13) vorhanden ist, der die Spule (5) trägt und auf den der Druckschieber (6) beim Einstecken des Einsteckteils (2) in das Aufnahmeteil (1) derart einwirkt, dass sich der Spulenträger (13) radial nach außen wölbt und der Durchmesser des Spulenträgers (13) in der Schließstellung wenigstens abschnittsweise größer als der Durchmesser des Spulenträgers (13) in der Zwischenstellung ist.

10. Kupplung mit einem Aufnahmeteil (1) nach einem der Ansprüche 1 bis 9 und mit einem Einsteckteil (2).

## Claims

1. Receiving part (1) of a coupling for a fluid line, which receiving part (1) is adapted to receive and lock a part for insertion (2) in a fully engaged position, there being present a resonant electrical circuit which is connected to the receiving part (1) and which has a coil (5) which, when the part for insertion (2) is in the fully engaged position and when electromagnetic energy is applied, is adapted to resonate at a certain resonant frequency corresponding to a frequency characteristic of full engagement, the resonant circuit being permanently closed and a tuning means being present which co-operates with the resonant circuit contactlessly and with the part for insertion (2) mechanically, in such a way that the resonant circuit has a resonant frequency different from the frequency characteristic of full engagement when the part for insertion (2) is in an intermediate position different from the fully engaged position and has the frequency characteristic of full engagement in the fully engaged position, the tuning means acting on the inductance of the resonant electrical circuit, **characterised in that** there is an acting part (6) present which, when the part for insertion (2) is inserted in the receiving part (1), acts on the coil (5) mechanically in such a way that the form of the coil (5) in the fully engaged position differs from the form of the coil (5) in the intermediate position.

2. Receiving part (1) according to claim 1, **characterised in that** the coil (5) is of a length in the fully engaged position which differs from the length of the coil (5) in the intermediate position.

3. Receiving part (1) according to claim 2, **characterised in that** the acting part takes the form of a pressure-operated slider (6) which, when the part for insertion (2) is inserted in the receiving part (1), slides over a receiving sleeve (11) and acts on the coil (5) in such a way that the length of the coil (5) in the fully engaged position is less than the length of the coil (5) in the intermediate position.

4. Receiving part (1) according to claim 3, **characterised in that**, when the part for insertion (2) is inserted in the receiving part (1), the pressure-operated slider (6) slides over a coil carrier (13), which is arranged between the pressure-operated slider (6) and the receiving sleeve (11), and acts directly on the coil (5) in such a way that the length of the coil (5) in the fully engaged position is less than the length of the coil (5) in the intermediate position.

5. Receiving part (1) according to one of claims 1 to 3, **characterised in that** the coil (5) comprises two part-windings (19) which are spaced apart from one another, the distance between the coil part-windings (19) in the fully engaged position differing from the distance between the coil part-windings (19) in the intermediate position.

6. Receiving part (1) according to claim 5, **characterised in that** the two coil part-windings (19) are received by a coil carrier (13) in the form of a separate component which comprises two winding carriers (21) and at least one resilient member (22) placed between the winding carriers (21).

7. Receiving part (1) according to claim 1, **characterised in that**, in the fully engaged position, at least a portion or portions of the coil (5) is/are of a diameter which differs from the diameter of the coil (5) in the intermediate position.

8. Receiving part (1) according to claim 7, **characterised in that** the acting part takes the form of a pressure-operated slider (6) which, when the part for insertion (2) is inserted in the receiving part (1), slides over a receiving sleeve (11) and acts on the coil (5) in such a way that, in the fully engaged position, at least a portion or portions of the coil (5) is/are of a diameter which is greater than the diameter of the coil (5) in the intermediate position.

9. Receiving part (1) according to claim 8, **characterised in that** a coil carrier (13) of a plastically deformable nature is present which carries the coil (5) and which, when the part for insertion (2) is inserted in the receiving part (1), acts on the pressure-operated slider (6) in such a way that the coil carrier (13) arches outwards radially and at least a portion or portions of the coil carrier (13) is/are of a diameter which is greater than the diameter of the coil carrier (13) in the intermediate position.

10. Coupling having a receiving part (1) according to one of claims 1 to 9 and having a part for insertion (2).

## Revendications

1. Elément femelle (1) d'un raccord pour conduite de fluide, qui est agencé de manière permettre à un élément mâle (2) d'être inséré et verrouillé en position d'accouplement dans celui-ci, un circuit électrique oscillant, équipé d'une bobine de self-induction (5), raccordé à l'élément femelle (1), étant en l'occurrence prévu, circuit qui, dans la position d'accouplement de l'élément mâle (2), lorsqu'une énergie électromagnétique de mise en oscillation est appliquée, est réglé à une fréquence de résonance déterminée correspondant à la fréquence d'identification d'accouplement assignée, ledit circuit oscillant étant en l'occurrence fermé en permanence, et un dispositif d'accord étant en l'occurrence prévu, dispositif qui opère sans contact en combinaison avec le circuit oscillant et mécaniquement avec l'élément mâle (2), dans des conditions telles que le circuit oscillant est a une fréquence de résonance différente de la fréquence d'identification d'accouplement assignée lorsque l'élément mâle (2) se trouve dans une position intermédiaire différente de sa position d'accouplement, et qu'il est a la fréquence d'identification d'accouplement assignée lorsque cet élément se trouve dans sa position d'accouplement, le dispositif d'accord modulant en l'occurrence l'inductance du circuit électrique oscillant, **caractérisé en ce qu'il** est prévu un élément d'actionnement (6) qui, lorsque l'élément mâle (2) est emmanché dans l'élément femelle (1), exerce une action mécanique sur la bobine de self-induction (5) dans des conditions telles que la forme de la bobine de self-induction (5) est, lorsque le raccord se trouve dans sa position d'accouplement, différente de la forme de la bobine de self-induction (5) lorsque celui-ci se trouve dans sa position intermédiaire.

2. Elément femelle (1) selon la revendication 1, **caractérisé en ce que** la bobine de self-induction (5) présente, dans la position d'accouplement, une longueur qui est différente de la longueur de la bobine de self-induction (5) dans la position intermédiaire.

3. Elément femelle (1) selon la revendication 2, **caractérisé en ce que** l'élément d'actionnement se présente sous la forme d'un module de poussée vecteur de pression (6) qui, lors de l'emmanchement de l'élément mâle (2) dans l'élément femelle (1), glisse sur une douille de réception (11) et exerce, ce faisant, sur la bobine de self-induction (5), une action telle que la longueur de la bobine de self-induction (5) est, dans la position d'emmanchement, plus réduite que la longueur de la bobine de self-induction (5) dans la position intermédiaire.

4. Elément femelle (1) selon la revendication 3, **caractérisé en ce que** le module de poussée vecteur de pression (6) glisse, lors de l'emmanchement de l'élément mâle (2) dans l'élément femelle (1), sur un élément support de bobine (13) disposé entre le module de poussée vecteur de pression (6) et la douille de réception (11) et engendre, ce faisant, une action qui s'exerce directement sur la bobine de self-induction (5) et qui fait que la longueur de la bobine de self-induction (5) est, dans la position d'emmanchement, plus réduite que la longueur de la bobine de self-induction (5) dans la position intermédiaire.

5. Elément femelle (1) selon l'une des revendications 1 à 3, **caractérisé en ce que** la bobine de self-induction (5) est constituée par deux bobinages partiels (19) respectivement disposés écartés l'un de l'autre, l'intervalle d'écartement des bobinages partiels (19) étant en l'occurrence, dans la position d'emmanchement, différent de l'intervalle d'écartement des bobinages partiels (19) dans la position intermédiaire.

6. Elément femelle (1) selon la revendication 5, **caractérisé en ce que** les deux bobinages partiels (19) sont montés sur un élément support de bobine (13) se présentant sous la forme d'un composant séparé, qui se compose de deux supports d'enroulements (21) et d'au-moins un élément élastique (22) disposé entre les supports d'enroulements (21).

7. Elément femelle (1) selon la revendication 1, **caractérisé en ce que** la bobine de self-induction (5) a, dans la position d'emmanchement, au-moins en partie, un diamètre qui est différent du diamètre de la bobine de self-induction (5) dans la position intermédiaire.

8. Elément femelle (1) selon la revendication 7, **caractérisé en ce que** l'élément d'actionnement se présente sous la forme d'un module de poussée vecteur de pression (6) qui, lors de l'emmanchement de l'élément mâle (2) dans l'élément femelle (1), glisse sur une douille de réception (11) et exerce, ce faisant, sur la bobine de self-induction (5), une action telle que le diamètre de la bobine de self-induction (5) est, dans la position d'emmanchement, au moins en partie, plus grand que le diamètre de la bobine de self-induction (5) dans la position intermédiaire.

9. Elément femelle (1) selon la revendication 8, **caractérisé en ce qu'**il est prévu un support de bobine (13) conçu pour pouvoir se déformer plastiquement, qui porte la bobine de self-induction (5) et qui, lors de l'emmanchement de l'élément mâle (2) dans l'élément femelle (1), exerce sur le module de poussée vecteur de pression (6) une action telle que le support de bobine (13) se voûte vers l'extérieur dans le plan radial et que le diamètre du support de bobine (13) est, dans la position d'emmanchement, au moins en partie, plus grand que le diamètre du support de bobine (13) dans la position intermédiaire.

10. Raccord constitué par un élément femelle (1) réalisé selon l'une des revendications 1 à 9 et par un élément mâle (2).
